# EUROPÄISCHE PATENTSCHRIFT

(11) **EP 4 443 318 B1**
(45) Veröffentlichungstag und Bekanntmachung des Hinweises auf die Patenterteilung: **15.07.2026**
(21) Anmeldenummer: 23167056.3
(22) Anmeldetag: 06.04.2023
(51) Int. Cl.: G06F 21/44, G06F 21/62

(54) **KOMMUNIKATIONS- UND AUTHENTIFIKATIONSVERFAHREN VON FUNKGEBUNDENEN MEDIZINISCHEN GERÄTEN AN EIN MIT EINEM KOMMUNIKATIONSNETZ VERBUNDENES ORDNUNGSSYSTEM**
METHOD FOR COMMUNICATING AND AUTHENTICATING WIRELESS MEDICAL DEVICES TO AN ORDERING SYSTEM CONNECTED TO A COMMUNICATION NETWORK
PROCÉDÉ DE COMMUNICATION ET D'AUTHENTIFICATION DE DISPOSITIFS MÉDICAUX RADIO-LIÉS À UN SYSTÈME D'ORDRE CONNECTÉ À UN RÉSEAU DE COMMUNICATION

(43) Veröffentlichungstag der Anmeldung: 09.10.2024
(73) Patentinhaber: B. Braun Melsungen AG, 34212 Melsungen (DE)
(72) Erfinder: SCHWARZ, Jan, 34212 Melsungen (DE); LAHMER, Thomas, 34587 Felsberg (DE); STEIGEMANN, Martin, 34560 Fritzlar (DE); BOETTIGER, Sandra, 34131 Kassel (DE); ERLEN, Christoph, 34132 Kassel (DE)
(74) Vertreter: Winter, Brandl - Partnerschaft mbB

(56) Entgegenhaltungen:
- US-A1- 2015 351 847
- US-A1- 2017 149 567
- US-A1- 2023 038 869

## Beschreibung

### Technisches Gebiet

Die vorliegende Offenbarung betrifft ein Kommunikations- und Authentifikationsverfahren von funkgebundenen medizinischen Geräten, z.B. Infusionspumpen gegenüber einem Ordnungssystem, z.B. einem Rack, das die funkgebundenen medizinischen Geräte körperlich aufnimmt, und das seinerseits in ein Kommunikationsnetz, z.B. in ein Krankenhausnetz eingebunden ist.

### Hintergrund der Erfindung

Die Entwicklung in der modernen Medizin, insbesondere der Intensivmedizin, hat zu Infusionstherapien geführt, die den gezielten Einsatz und die exakte Dosierung hochwirksamer Medikamente erfordern. Im Rahmen dieser Therapien müssen je nach Krankheitsbild oftmals mehrere Medikamente und optional parenterale Ernährung verabreicht werden. Im medizinisch therapeutischen Umfeld werden dazu häufig mehrere verschiedene medizinische Geräte miteinander verschaltet. Ein Beispiel hierfür sind Infusionspumpen zur intravenösen Verabreichung von Medikamenten oder Nährstoffen, welche aus Bereichen wie Operationssälen, Intensivstationen, der Onkologie, Schmerztherapie, der klinischen Ernährung, etc. nicht mehr weg zudenken sind. Dabei können sowohl einzelne Infusionspumpen als mehrere zusammengeschaltete Infusionspumpen eingesetzt werden, welche für die Infusion verschiedener Stoffe und Dosierungen sowie spezifisch für verschiedene Infusionstherapien für einen Patienten eingestellt werden können.

Um eine Bündelung von verschiedenen medizinischen Geräten für einen Patienten zu vereinfachen, und um diese auch körperlich bzw. räumlich z.B. neben dem Bett des betroffenen Patienten zusammenfassen zu können existieren diverse Ordnungssysteme, z.B. Racks.

Aus der WO 2015/124670 A1 bzw. EP 3 108 390 ist ein Rack für Infusionspumpen bekannt, das über eine WIFI-Funkverbindung mit einem Krankenhausnetz (via einem Access Point) verbunden ist. Die einzelnen Infusionspumpen werden beim Einsetzen in das Rack jeweils mit einem Datenbus des Racks verbunden. Die Infusionspumpen sind auch WIFI-fähig, so dass sie z.B. im Falle eines Kommunikationsfehlers innerhalb des Racks auf eine direkte WIFI-Verbindung mit dem Krankenhausnetz (via dem Access Point) umschalten bzw. ausweichen können.

Aus hausinternem Stand der Technik ist ein Rack mit Infusionspumpen bekannt, wobei das Rack und die Infusionspumpen einen Datenbus zur Kommunikation nutzen, der mit Infrarot arbeitet. Diese Datenübertragung ist angreifbar.

US 2023/038869 A1 offenbart ein computerimplementiertes Verfahren, das das Bestimmen einer Position einer Vielzahl von Infusionspumpen in einem Pumpenstapel aufweist, der die Vielzahl von Infusionspumpen und eine mit jeder der Vielzahl von Infusionspumpen verbundene Flüssigkeitsversorgung enthält. Weiterer Stand der Technik ist aus der US 2017/149567 A1 und US 2015/351847 A1 bekannt.

### Kurzbeschreibung der Erfindung

Aufgabe der vorliegenden Offenbarung ist es, für eine Funkverbindung, z.B. WIFI zwischen einem Ordnungssystem, z.B. Rack und einem medizinischen Gerät, z.B. einer Infusionspumpe, die Datensicherheit zu erhöhen.

Diese Aufgabe wird mit der Merkmalskombination des Anspruchs 1 gelöst.

Die Anordnung gemäß der Offenbarung hat ein oder vorzugsweise mehrere medizinische Geräte, z.B. Infusionspumpen, und weiterhin mindestens ein Ordnungssystem, z.B. ein Rack oder eine Säule oder mehrere Racks oder mehrere Säulen mit mindestens einer oder vorzugsweise mehreren Aufnahmen für das oder die medizinischen Geräte. Jedes medizinische Gerät hat eine Vorrichtung und jede Aufnahme des Ordnungssystems hat eine vergleichbare Vorrichtung zur Erzeugung einer direkten Punkt-zu-Punkt-Verbindung. Das Ordnungssystem weist ein zentrales Kommunikationsgerät (ComSystem) auf. Das Kommunikationsgerät und das medizinische Gerät, insbesondere ein Kommunikationsmodul des medizinischen Gerätes, sind derart konfiguriert und programmiert, dass nach der Erzeugung der direkten Punkt-zu-Punkt-Verbindung darüber zunächst ein Kommunikationskanal zwischen dem Kommunikationsgerät und dem medizinischen Gerät, insbesondere dessen Kommunikationsmodul aufgebaut wird (der Kommunikationskanal ist zu diesem Zeitpunkt noch ungesichert), und danach Daten zur Berechnung eines Sicherheitsschlüssels, mit einem lokalen Geheimnis, z.B. einer Signatur, vom Kommunikationsgerät über den Kommunikationskanal zum medizinischen Gerät, insbesondere zu dessen Kommunikationsmodul übertragen wird. Weiterhin ist das medizinische Gerät, insbesondere dessen Kommunikationsmodul konfiguriert und programmiert, um danach aus den Daten zur Berechnung des Sicherheitsschlüssels mit dem lokalen Geheimnis und aus einem der gesamten Anordnung einheitlich zugeordneten globalen Geheimnis, z.B. einem Zertifikat, den z.B. als Pre Shared Key (PSK) ausgebildeten Sicherheitsschlüssel zu berechnen. Mit diesem Sicherheitsschlüssel wird dann eine gesicherte Funkverbindung zwischen dem Kommunikationsgerät und dem medizinischen Gerät, insbesondere dessen Kommunikationsmodul erzeugt. Die gesicherte Funkverbindung dient zur Übertragung von medizinischen Daten und/oder Steuerungsdaten (z.B. für die Infusionspumpe) und/oder Statusdaten (z.B. der Infusionspumpe) zwischen dem medizinischen Gerät und dem Kommunikationsgerät.

Die Anordnung gemäß der Offenbarung nutzt dabei das Ordnungssystem als Übertragungsmedium für das lokale Geheimnis und baut anschließend die verschlüsselte Funkverbindung auf. Zudem erfolgt der Aufbau der Funkverbindung immer dann, wenn das medizinische Gerät in das Ordnungssystem eingesteckt wird und erkannt wird, dass daran ein Kommunikationsgerät angeschlossen ist.

In anderen Worten ausgedrückt wird gemäß der Offenbarung ein Authentifizierungsverfahren für medizinische Geräte, z.B. Infusionspumpen einer Anordnung vorgesehen, die in ein Ordnungssystem, z.B. Rack der Anordnung eingeschoben werden. Mit dem Annähern oder Einschieben wird durch Vorrichtungen eine erste noch unsichere und möglicherweise langsamere direkte Punkt-zu-Punkt-Verbindung zwischen dem medizinischen Gerät, insbesondere dessen Kommunikationsmodul und dem Kommunikationsgerät des Ordnungssystems realisiert. Nach der Erzeugung dieser Verbindung wird darüber ein Kommunikationskanal zwischen dem medizinischen Gerät, insbesondere dessen Kommunikationsmodul und dem Kommunikationsgerät aufgebaut, wobei dieser Kommunikationskanal ungesichert ist. Über das Zustandekommen dieses Kommunikationskanals wird das Authentifizierungsverfahren gestartet oder getriggert, um danach eine gesicherte Funkverbindung zwischen dem medizinischen Gerät, insbesondere dessen Kommunikationsmodul und dem Kommunikationsgerät aufzubauen.

Über dieses Authentifizierungsverfahren ist eine Datensicherheit der sensiblen patientenspezifischen Daten wie z.B. die Übertragung von sensiblen Patientendaten, Medikamenten und Flussraten der Infusionspumpe gegeben.

Die direkte Punkt-zu-Punkt-Verbindung kann optisch oder kabelgebunden oder mittels Funk realisiert werden. Bei einer konkreten Ausgestaltung handelt es sich um eine Infrarot-Verbindung.

Bei einer besonders bevorzugten Weiterbildung oder Erweiterung der Anordnung ist das Kommunikationsgerät mit einem Krankenhausnetzwerk verbunden. Damit ist eine zentrale Steuerung von mehreren in dem Ordnungssystem aufgenommenen medizinischen Geräten möglich. Damit kann die Kompetenz zur Bedienung und zur exakten Berücksichtigung der patientenspezifischen Daten, wie z.B. passende Einstellung der verschiedenen Flussraten der Infusionspumpen im Krankenhaus zentralisiert werden.

Besondere Datensicherheit ist gegeben, wenn die Verbindung des Kommunikationsgerätes mit dem Krankenhausnetzwerk kabelgebunden ist.

Das Authentifizierungsverfahren ist vorzugsweise derart weitergebildet, dass das lokale Geheimnis speziell / spezifisch auf dem Kommunikationsgerät vorab gespeichert und erzeugt wird, und dass vorab auch ein globales Geheimnis (Hospital Secret) auf den medizinischen Geräten, insbesondere deren Kommunikationsmodulen und dem Kommunikationsgerät gespeichert wird.

In einem Krankenhaus sind oftmals mehrere Racks und damit mehrere Kommunikationsgeräte vorgesehen. Dann hat die Anordnung gemäß der Offenbarung diese Mehrzahl von Racks mit den jeweils zugeordneten Kommunikationsgeräten. In diesem Fall wird vorab auf den Kommunikationsgeräten das gleiche globale Geheimnis gespeichert.

Um bei der Authentifizierung Zeit zu sparen, werden die Daten zur Berechnung des Sicherheitsschlüssels auf dem mindestens einen Kommunikationsgerät basierend auf dem globalen Geheimnis und dem lokalen Geheimnis vorzugsweise vorab berechnet und gespeichert.

Das hier mehrfach verwendete Wort "vorab" heißt "vor der Erzeugung der kabelgebundenen Verbindung".

Im Folgenden wird von lediglich einem Kommunikationsgerät und von lediglich einem medizinischen Gerät gesprochen, obwohl - wie ausgeführt - auch jeweils mehrere Geräte vorgesehen sein können und dann die genannten Weiterbildungen auf allen medizinischen Geräten bzw. allen Kommunikationsgeräten vorgesehen sein sollen. Das lokale Geheimnis unterscheidet sich auf verschiedenen Kommunikationsgeräten. Lediglich das globale Geheimnis ist bei allen teilnehmenden Geräten (der Anordnung) identisch.

Vorzugsweise wird der Sicherheitsschlüssel auf dem Kommunikationsgerät und auf dem medizinischen Gerät mittels einer jeweiligen Schlüsselerzeugungseinheit oder mittels eines jeweiligen Schlüsselgenerators berechnet. Diese bzw. dieser ist im Falle des medizinischen Gerätes vorzugsweise auf dessen Kommunikationsmodul angeordnet und/oder programmiert.

Besonders bevorzugt wird es, wenn die beiden Schlüsselerzeugungseinheiten bzw. Schlüsselgeneratoren HASH-basierte Schlüsselerzeugungseinheiten bzw. HASH-basierte Schlüsselgeneratoren, insbesondere mit einem HMAC-SHA256 Ansatz programmiert sind.

Vorzugsweise werden die Daten zur Berechnung des Sicherheitsschlüssels verschlüsselt, also nicht in Klartext vom Kommunikationsgerät übertragen. Entsprechend werden vorzugsweise die Daten zur Berechnung des Sicherheitsschlüssels auf dem medizinischen Gerät entschlüsselt. Dadurch wird die Datensicherheit noch erhöht.

Besonders bevorzugt wird es, dass das medizinische Gerät konfiguriert und programmiert ist, nach der Erzeugung der direkten Punkt-zu-Punkt-Verbindung und dem Aufbau des Kommunikationskanals die Daten zur Berechnung des Sicherheitsschlüssels über den Kommunikationskanal anzufragen. Danach erfolgt die Übertragung der Daten zur Berechnung des Sicherheitsschlüssels vom Kommunikationsgerät zum medizinischen Gerät.

Bei einer besonders bevorzugten Weiterbildung der offenarten Anordnung ist das Kommunikationsgerät konfiguriert und programmiert, dass die Daten zur Berechnung des Sicherheitsschlüssels eine Kennung des Kommunikationsgerätes oder des Funknetzwerkes vom Kommunikationsgerät aufweisen. Dies kann zusammen mit dem lokalen Geheimnis in einem gemeinsamen Datenumschlag erfolgen.

Die gesicherte Funkverbindung ist vorzugsweise eine WIFI- oder WLAN-Verbindung, die nach einem WLAN-Sicherheitsstandard, z.B. WIFI Protected Access 2 (WPA2) gesichert ist.

Wenn die Kennung des Kommunikationsgerätes oder des Funknetzwerkes und die Weiterbildung der Funkverbindung als WIFI- oder WLAN-Verbindung vorgesehen sind, dann ist die Kennung ein Service Set Identifier (SSID). In diesem Fall wird es besonders bevorzugt, wenn das Kommunikationsgerät und das medizinischen Gerät konfiguriert und programmiert sind, dass die Daten zur Berechnung des Sicherheitsschlüssels ferner die Kennung des Kommunikationsgerätes oder des Funknetzwerkes, insbesondere den Service Set Identifier (SSID) aufweisen, um den Service Set Identifier (SSID) zusammen mit dem lokalen Geheimnis vom Kommunikationsgerät über den Kommunikationskanal zum medizinischen Gerät zu übertragen.

Die gesicherte Funkverbindung kann auch eine Bluetooth-Verbindung oder eine Mobilfunk-Verbindung z.B. 3G, 4G oder LTE sein.

Die Datensicherheit ist weiter erhöht, wenn das medizinische Gerät, insbesondere sein Kommunikationsmodul programmiert und eingerichtet ist, dass ein physikalisches Trennen der beiden Vorrichtungen erkannt wird und danach die gesicherte Funkverbindung unterbrochen wird.

### Kurzbeschreibung der Figuren

Fig. 1 zeigt eine Anordnung gemäß dem Ausführungsbeispiel der vorliegenden Offenbarung;
Fig. 2 zeigt einen Ausschnitt des Racks aus Fig. 1 ohne Infusionspumpen;
Fig. 3 zeigt schematisch die Verteilung des globalen Geheimnisses auf die Geräte der Anordnung aus Fig. 1; und
Fig. 4 zeigt schematisch die Anordnung aus Fig. 1 mit den beiden Geheimnissen des Kommunikationsgerätes.
Fig. 5 zeigt schematisch die Übersicht des Kommunikation- und Authentifizierungsprozesses gemäß einem Ausführungsbeispiel der vorliegenden Offenbarung;

### Beschreibung des Ausführungsbeispiels

Nachstehend wird ein Ausführungsbeispiel der vorliegenden Offenbarung auf der Basis der zugehörigen Figuren beschrieben.

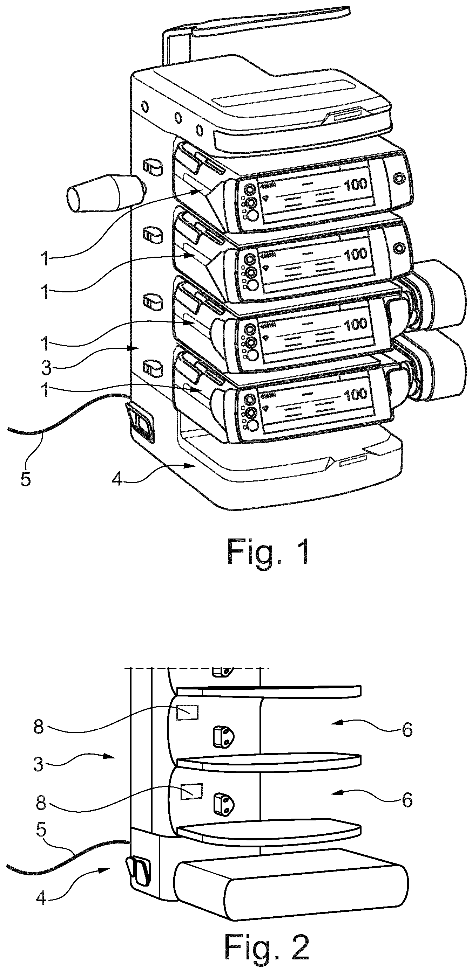

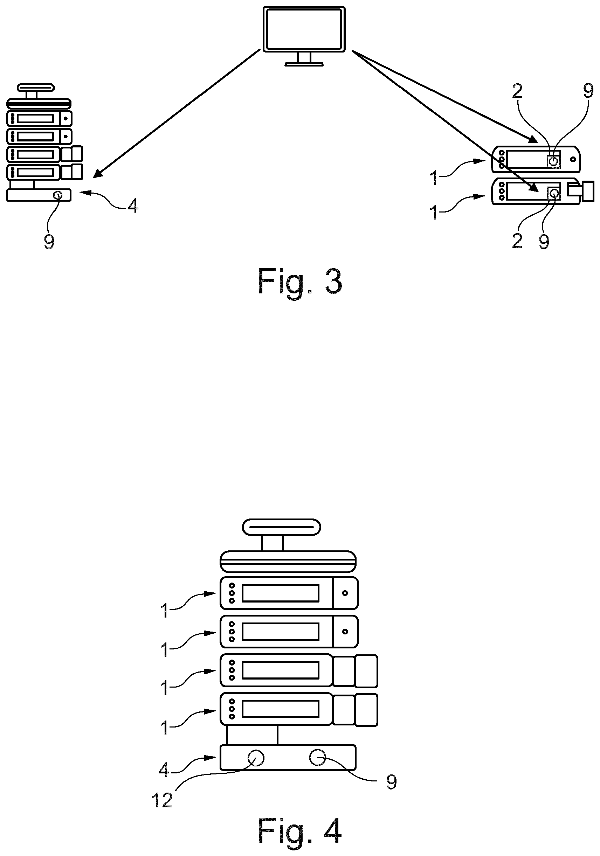

Das in Fig. 1 gezeigte Ausführungsbeispiel der Anordnung hat vier Infusionspumpen 1 mit einem jeweiligen Prozessor (nicht gezeigt) und mit einem (in Fig. 3 schematisch dargestellten) Kommunikationsmodul 2 nach WIFI-Standard. Die Anordnung hat weiterhin ein als einzelnes Rack 3 ausgebildetes Ordnungssystem und ein an das Rack 3 angeschlossenes oder in das Rack 3 integriertes Kommunikationsgerät 4 (ComSystem). Das Kommunikationsgerät 4 ermöglicht über Kabel 5 eine drahtgebundene (z.B. Ethernet) Verbindung oder eine drahtlose Verbindung per Funk mit einem Krankenhausnetzwerk.

Diese Anordnung ist dazu ausgelegt, neben einem Bett eines Patienten zu stehen und dem Patienten (in diesem Fall vier) verschiedene Flüssigkeiten, insbesondere Medikamente über die jeweiligen Infusionspumpen 1 zuzuführen.

Das Kommunikationsgerät 4 lässt sich beim gezeigten Ausführungsbeispiel als eine Art WIFI Accesspoint für die in das Rack 3 eingebrachten Infusionspumpen 1 darstellen.

Fig. 2 zeigt einen Ausschnitt des Racks 3 aus Fig. 1 ohne Infusionspumpen 1. Daher sind die Aufnahmen 6 des Racks 3 für die (in Fig. 1 gezeigten) Infusionspumpen 1 zu erkennen. Jede Aufnahme 6 hat eine auf Infrarot-Licht basierende optische Vorrichtung 8, die zum Verbindungsaufbau des Kommunikationsmoduls 2 mit einem Kommunikationsbus des Racks 3 mittels einer entsprechenden pumpenseitigen ebenfalls auf Infrarot basierenden optischen Vorrichtung (nicht gezeigt) ausgebildet ist.

Fig. 3 zeigt, dass beim initialen Aufsetzen der Anordnung ein globales Geheimnis 9 (Hospital Secret) über eine zufallsbedingte Methode erzeugt wird und auf dem Kommunikationsgerät 4 in einem sicheren Datenspeicher abgelegt wird. Das globale Geheimnis 9 wird auf einem Kommunikationsgerät 4 erzeugt und kann danach auf allen anderen Geräten der Anordnung eingesetzt werden. Dieses globale Geheimnis 9 kann durch einen Servicetechniker in verschlüsselter Form aus dem Kommunikationsgerät 4 heruntergeladen werden, um es später an die Kommunikationsmodule 2 der Infusionspumpen 1 zu verteilen, die an das Kommunikationsgerät 4 angebunden werden sollen.

Gemäß Fig. 4 generiert das Kommunikationsgerät 4 bei oder vor der Authentifizierung zusätzlich ein lokales Geheimnis 12, z.B. eine Gerätesignatur des Kommunikationsgeräts 4, und ein Service Set Identifier (SSID) (in Fig. 4 nicht gezeigt). Auch diese Daten werden in dem sicheren Datenspeicher des Kommunikationsgeräts 4 abgelegt.

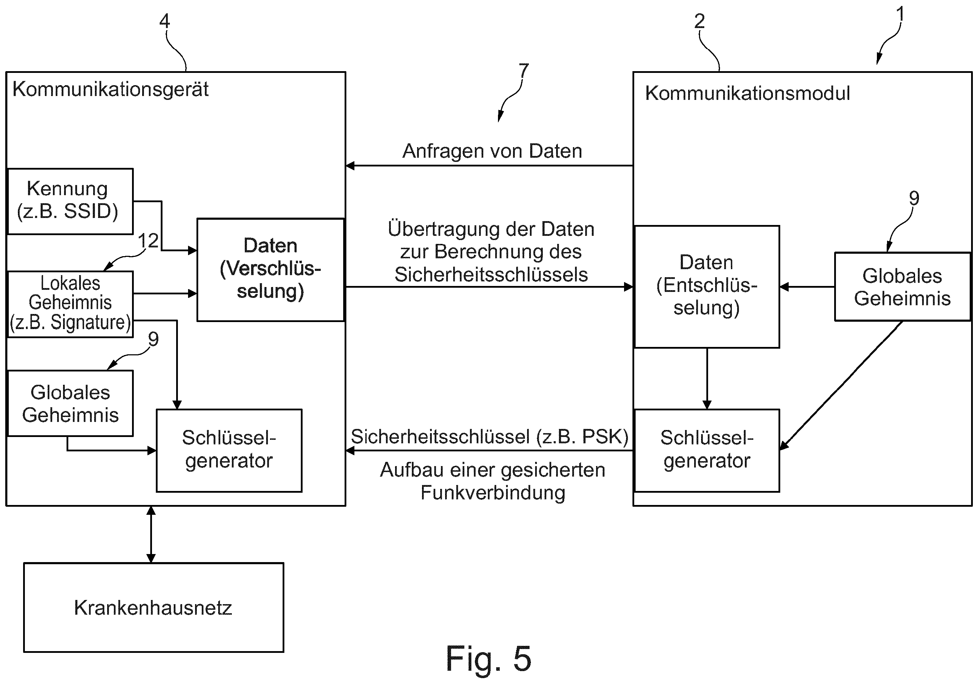

Fig. 5 zeigt eine Übersicht eines Kommunikation- und Authentifizierungsprozesses. Wenn eine Infusionspumpe 1 in eine Aufnahme 6 des Racks 3 eingesteckt wird, erkennt des Kommunikationsmodul 2 der Infusionspumpe 1 das an das Rack 3 angeschlossene Kommunikationsgerät 4. Ein Kommunikationskanal 7 wird danach zwischen dem Kommunikationsgeräts 4 und dem Kommunikationsmodul 2 der Infusionspumpe 1 aufgebaut. Es findet ein Handshake zwischen dem Kommunikationsmodul 2 der Infusionspumpe 1 und dem Kommunikationsgerät 4 über den Kommunikationskanal 7 statt, um eine gesicherte, verschlüsselte WIFI-Funkverbindung zwischen dem Kommunikationsmodul 2 und dem Kommunikationsgerät 4 aufzubauen.

Nach der erfolgreichen Authentifizierung wird ein Austausch von medizinischen Daten und/oder patientenbezogenen Daten und/oder Pumpen-Daten zwischen der Infusionspumpe 1 und dem vorzugsweise drahtgebundenen Netzwerk des Krankenhauses ermöglicht. Dieser Datenaustausch erfolgt zwischen dem Kommunikationsmodul 2 der Infusionspumpe 1 und dem Netzwerk des Krankenhauses über das Kommunikationsgerät 4 des Racks 3. Dabei besteht zwischen dem Kommunikationsmodul 2 und dem Kommunikationsgerät 4 eine z.B. durch WIFI Protected Access II (WPA2) gesicherte Funkverbindung.

Das lokale Geheimnis 12 und das globale Geheimnis 9 bilden die Eingangsparameter für einen HASH-basierten Schlüsselgenerator, der über einen HMAC-SHA256-Ansatz, den Pre-Shared Key erzeugt. Der Pre-Shared Key wird genutzt, um den WIFI-Accesspoint aufzubauen, mit dem sich die Infusionspumpen 1 über ihre Kommunikationsmodule 2 verbinden können. Für die Funkverbindung zwischen Kommunikationsgerät 4 und den Kommunikationsmodulen 2 wird neben dem Pre-Shared Key auch der Service Set Identifier (SSID) benötigt.

Das Kommunikationsgerät 4 generiert und speichert die Daten, die zur Berechnung des Pre-Shared Keys notwendig sind. Die erste Anfrage dieser Daten erfolgt nach dem Einstecken der Infusionspumpe 1 in das Rack 3 und über den Kommunikationskanal 7. Das Kommunikationsmodul 2 der Infusionspumpe 1 fragt die zur Berechnung des Pre-Shared Keys nötigen Daten über den Datenbus des Racks 3 beim Kommunikationsgerät 4 an, welches seinerseits diese Daten an das Kommunikationsmodul 2 weiterleitet.

Um die Datensicherheit zu maximieren werden die Daten, die zur Generierung des Geheimnisses verwendet werden, nicht in Klartext übertragen und auch nicht gespeichert. Ebenso werden die Daten, die ausgetauscht werden, nicht direkt als Geheimnis verwendet, d. h. die übertragenen Daten entsprechen nicht dem Geheimnis. Die übertragenen Daten werden lediglich als Eingangsgrößen verwendet, um den Pre-Shared Key mittels kryptografischer HASH - Funktionen (z.B. mit einer Key Derivation Function) zu generieren. Wenn dieses existiert bzw. generiert ist, kann die oben genannte verschlüsselte/gesicherte Funkverbindung aufgebaut werden.

Wenn die Infusionspumpe aus dem Rack 3 entfernt wird, wird dieses von der Infusionspumpe 1 erkannt und diese Information an sein Kommunikationsmodul 2 weitergegeben. Das Kommunikationsmodul 2 löst daraufhin die bestehende Funkverbindung zwischen Infusionspumpe 1 und Kommunikationsgerät 4 auf.

Werden in einem Krankenhaus mehr als ein Ordnungssystem 3 mit jeweiligem Kommunikationsgerät 4 verwendet, was üblich ist, so kann dieser WIFI-Accesspoint-Mechanismus genutzt werden, um weitere Infusionspumpen 1 an weitere Kommunikationsgeräte 4 anzubinden. Entscheidend ist, dass dasselbe globale Geheimnis 9 (Hospital Secret) des ersten Kommunikationsgerätes 4 auf den weiteren Kommunikationsgeräten 4 verwendet wird, um die Anbindung aller Infusionspumpen 1 in unterschiedlichen Ordnungssystemen 3 zu ermöglichen. Nachdem das globale Geheimnis 9 auf die weiteren Kommunikationsgeräte 4 verteilt wurde, generieren diese jeweils ihren eigene Service Set Identifier (SSID) und Pre-Shared Key. Wenn eine Infusionspumpe 1 in ein anderes Ordnungssystem 3 mit anderem Kommunikationsgerät 4 eingesteckt, wird der oben beschriebene Authentifizierungsmethode angewendet. Jedes Ordnungssystem 3 kann ein Rack oder eine Säule oder mehrere Racks oder mehrere Säulen sein.

### Bezugszeichenliste:

- 1: medizinisches Gerät / Infusionspumpe
- 2: Kommunikationsmodul
- 3: Ordnungssystem / Rack
- 4: Kommunikationsgerät
- 5: Kabel
- 6: Aufnahme
- 7: Kommunikationskanal
- 8: Vorrichtung zur Erzeugung einer direkten Punkt-zu-Punkt-Verbindung
- 9: globales Geheimnis
- 12: lokales Geheimnis

## Patentansprüche

1. Anordnung mit mindestens einem medizinischen Gerät (1), insbesondere eine Infusionspumpe, das eine Vorrichtung zur Erzeugung einer direkten Punkt-zu-Punkt-Verbindung aufweist, und mit einem Ordnungssystem (3), das mindestens eine Aufnahme (6) für das medizinische Gerät (1) und eine Vorrichtung (8) zur Erzeugung der direkten Punkt-zu-Punkt-Verbindung aufweist, wobei das Ordnungssystem (3) weiterhin ein Kommunikationsgerät (4) aufweist, **dadurch gekennzeichnet, dass** das Kommunikationsgerät (4) und das medizinische Gerät (1) konfiguriert und programmiert sind, um nach der Erzeugung der direkten Punkt-zu-Punkt-Verbindung darüber einen Kommunikationskanal (7) aufzubauen und darüber Daten zur Berechnung eines Sicherheitsschlüssels mit einem lokalen Geheimnis (12) vom Kommunikationsgerät (4) zum medizinischen Gerät (1) über den Kommunikationskanal (7) zu übertragen, wobei das medizinische Gerät (1) konfiguriert und programmiert ist, um aus den übertragenen Daten zur Berechnung des Sicherheitsschlüssels mit dem lokalen Geheimnis (12) und aus einem globalen Geheimnis (9) den Sicherheitsschlüssel, insbesondere einen Pre-Shared Key zu berechnen, um mit diesem eine gesicherte Funkverbindung zur Übertragung von medizinischen Daten und/oder Steuerungsdaten zwischen dem medizinischen Gerät (1) und dem Kommunikationsgerät (4) zu erzeugen.

2. Anordnung nach Anspruch 1 **dadurch gekennzeichnet, dass** das Kommunikationsgerät (4) mittels eines Kabels (5) mit einem Krankenhausnetzwerk verbindbar oder verbunden ist.

3. Anordnung nach einem der vorhergehenden Ansprüche **dadurch gekennzeichnet, dass** das globale Geheimnis (9) auf dem medizinischen Gerät (1) und dem Kommunikationsgerät (4) vorab gespeichert ist, und dass das lokale Geheimnis (12) auf dem Kommunikationsgerät (4) vorab gespeichert ist.

4. Anordnung nach einem der vorhergehenden Ansprüche **dadurch gekennzeichnet, dass** die Anordnung mehrere Ordnungssysteme (3) mit einem jeweiligen Kommunikationsgerät (4) und/oder mehrere medizinische Geräte (1) aufweist, wobei das genau eine globale Geheimnis (9) auf den Kommunikationsgeräten (4) und den medizinischen Geräten (1) vorab gespeichert ist, und dass ein jeweiliges lokales Geheimnis (12) auf jedem Kommunikationsgerät (4) vorab gespeichert ist.

5. Anordnung nach einem der vorhergehenden Ansprüche **dadurch gekennzeichnet, dass** der Sicherheitsschlüssel auch auf dem Kommunikationsgerät (4) basierend auf dem globalen Geheimnis (9) und dem lokalen Geheimnis (12) vorab berechnet und gespeichert ist.

6. Anordnung nach Anspruch 5 **dadurch gekennzeichnet, dass** der Sicherheitsschlüssel auf dem Kommunikationsgerät (4) und auf dem medizinischen Gerät (1) mittels eines jeweiligen Schlüsselgenerators berechnet sind oder werden.

7. Anordnung nach Anspruch 6 **dadurch gekennzeichnet, dass** die beiden Schlüsselgeneratoren mit einem HMAC-SHA256 Ansatz programmiert sind.

8. Anordnung nach einem der vorhergehenden Ansprüche **dadurch gekennzeichnet, dass** das Kommunikationsgerät (4) und das medizinischen Gerät (1) konfiguriert und programmiert sind, dass die Daten zur Berechnung des Sicherheitsschlüssels ferner eine Kennung des Kommunikationsgerätes (4) vom Kommunikationsgerät (4) aufweisen.

9. Anordnung nach einem der vorhergehenden Ansprüche **dadurch gekennzeichnet, dass** die gesicherte Funkverbindung eine WIFI- oder WLAN-Verbindung ist.

10. Anordnung nach den Ansprüchen 8 und 9 **dadurch gekennzeichnet, dass** die Kennung des Kommunikationsgerätes (4) ein Service Set Identifier, SSID, ist.

11. Anordnung nach einem der vorhergehenden Ansprüche **dadurch gekennzeichnet, dass** das Kommunikationsgerät (4) und das medizinischen Gerät (1) konfiguriert und programmiert sind, dass die Daten zur Berechnung des Sicherheitsschlüssels verschlüsselt vom Kommunikationsgerät über den Kommunikationskanal zum medizinischen Gerät (1) übertragen werden.

12. Anordnung nach einem der vorhergehenden Ansprüche **dadurch gekennzeichnet, dass** das Kommunikationsgerät (4) und das medizinischen Gerät (1) konfiguriert und programmiert sind, dass die Daten zur Berechnung des Sicherheitsschlüssels auf dem medizinischen Gerät (1) entschlüsselt werden.

13. Anordnung nach einem der Ansprüche 1 bis 8 **dadurch gekennzeichnet, dass** die gesicherte Funkverbindung eine Bluetooth-Verbindung oder eine Mobilfunk-Verbindung ist.

14. Anordnung nach einem der vorhergehenden Ansprüche **dadurch gekennzeichnet, dass** das medizinische Gerät (1) programmiert und eingerichtet ist, ein physikalisches Trennen der beiden Vorrichtungen (8) erkennt und danach die gesicherte Funkverbindung unterbricht.

15. Kommunikations- und Authentifikationsverfahren von funkgebundenen medizinischen Geräten (1) an ein mit einem Kommunikationsnetz verbundenes Ordnungssystem (3), folgendes aufweisend:
- Erzeugung einer direkten Punkt-zu-Punkt-Verbindung zwischen dem Ordnungssystem (3) und dem mindestens einen medizinischen Gerät (1);
- Aufbauen eines Kommunikationskanals (7) zwischen dem Ordnungssystem (3) und dem medizinischen Gerät (1) über die direkte Punkt-zu-Punkt-Verbindung;
- Übertragung von Daten zur Berechnung eines Sicherheitsschlüssels, wobei die übertragenen Daten ein lokales Geheimnis (12) umfassen, vom Ordnungssystem (3) über den Kommunikationskanal (7) zum medizinischen Gerät (1);
- Erzeugung des Sicherheitsschlüssels auf dem medizinischen Gerät (1) unter Verwendung des lokalen Geheimnisses (12) und eines auf dem medizinischen Gerät (1) gespeicherten globalen Geheimnisses (9), wobei der Sicherheitsschlüssel insbesondere ein Pre-Shared Key ist; und
- Aufbauen einer gesicherten Funkverbindung unter Verwendung des erzeugten Sicherheitsschlüssels zur Übertragung von medizinischen Daten und/oder Steuerungsdaten zwischen dem Ordnungssystem (3) und dem medizinischen Gerät (1).

## Claims

1. An assembly with at least one medical device (1), in particular an infusion pump, which comprises a device for generating a direct point-to-point connection, and with an organization system (3), which comprises at least one receptacle (6) for the medical device (1) and a device (8) for generating the direct point-to-point connection, wherein the organization system (3) further comprises a communication device (4), **characterized in that** the communication device (4) and the medical device (1) are configured and programmed to set up a communication channel (7) after the direct point-to-point connection has been generated and to transmit data for calculating a security key with a local secret (12) from the communication device (4) to the medical device (1) via the communication channel (7), wherein the medical device (1) is configured and programmed to calculate the security key, in particular a pre-shared key, from the transmitted data for calculating the security key with the local secret (12) and from a global secret (9), in order to generate a secure radio connection for transmitting medical data and/or control data between the medical device (1) and the communication device (4).

2. The assembly according to claim 1, **characterized in that** the communication device (4) is connectable or connected to a hospital network via a cable (5).

3. The assembly according to one of the preceding claims, **characterized in that** the global secret (9) is stored in advance on the medical device (1) and on the communication device (4), and that the local secret (12) is stored in advance on the communication device (4).

4. The assembly according to one of the preceding claims, **characterized in that** the assembly comprises a plurality of organization systems (3) with a respective communication device (4) and/or a plurality of medical devices (1), wherein the exactly one global secret (9) is stored in advance on the communication devices (4) and on the medical devices (1), and that a respective local secret (12) is stored in advance on each communication device (4).

5. The assembly according to one of the preceding claims, **characterized in that** the security key is also calculated and stored in advance on the communication device (4) based on the global secret (9) and the local secret (12).

6. The assembly according to claim 5, **characterized in that** the security key is or are or will be calculated on the communication device (4) and on the medical device (1) via a respective key generator.

7. The assembly according to claim 6, **characterized in that** the two key generators are programmed with an HMAC-SHA256 approach.

8. The assembly according to one of the preceding claims, **characterized in that** the communication device (4) and the medical device (1) are configured and programmed, that the data for calculating the security key further comprise an identifier of the communication device (4) from the communication device (4).

9. The assembly according to one of the preceding claims, **characterized in that** the secured radio connection is a WIFI or WLAN connection.

10. The assembly according to claims 8 and 9, **characterized in that** the identifier of the communication device (4) is a service set identifier, SSID.

11. The assembly according to one of the preceding claims, **characterized in that** the communication device (4) and the medical device (1) are configured and programmed such that the data for calculating the security key are transmitted in encrypted form from the communication device via the communication channel to the medical device (1).

12. The assembly according to one of the preceding claims, **characterized in that** the communication device (4) and the medical device (1) are configured and programmed such that the data for calculating the security key are decrypted on the medical device (1).

13. The assembly according to one of claims 1 to 8, **characterized in that** the secured radio connection is a Bluetooth connection or a mobile radio connection.

14. The assembly according to one of the preceding claims, **characterized in that** the medical device (1) is programmed and set up to detect a physical separation of the two devices (8) and then to interrupt the secured radio connection.

15. A communication and authentication method of radio-bound medical devices (1) to an organization system (3) connected to a communication network, comprising the following:
- generating a direct point-to-point connection between the organization system (3) and the at least one medical device (1);
- setting up a communication channel (7) between the organization system (3) and the medical device (1) via the direct point-to-point connection;
- transmitting data, from the organization system (3) via the communication channel (7) to the medical device (1), for calculating a security key, wherein the transmitted data comprise a local secret (12), ;
- generating the security key on the medical device (1) using the local secret (12) and a global secret (9), which is stored on the medical device (1), wherein the security key is in particular a pre-shared key; and
- setting up a secured radio connection using the generated security key for transmitting medical data and/or control data between the organization system (3) and the medical device (1).

## Revendications

1. Ensemble avec au moins un appareil médical (1), en particulier une pompe de perfusion qui présente un dispositif de génération d'une liaison directe point à point, et avec un système d'ordre (3) qui présente au moins un logement (6) pour l'appareil médical (1) et un dispositif (8) de génération de la liaison directe point à point, dans lequel le système d'ordre (3) présente en outre un appareil de communication (4), **caractérisé en ce que** l'appareil de communication (4) et l'appareil médical (1) sont configurés et programmés afin d'établir après la génération de la liaison directe point à point par ce biais un canal de communication (7) et de transférer par ce biais un canal de communication (7) et par ce biais des données pour calculer une clé de sécurité avec un secret local (12) de l'appareil de communication (4) à l'appareil médical (1) par le biais du canal de communication (7), dans lequel l'appareil médical (1) est configuré et programmé afin de calculer la clé de sécurité à partir des données transmises pour le calcul de la clé de sécurité avec le secret local (12) et à partir d'un secret global (9), en particulier une clé prépartagée afin de générer avec celle-ci une liaison radio sécurisée pour transmettre des données médicales et/ou des données de commande entre l'appareil médical (1) et l'appareil de communication (4).

2. Ensemble selon la revendication 1, **caractérisé en ce que** l'appareil de communication (4) est ou peut être relié à un réseau hospitalier au moyen d'un câble (5).

3. Ensemble selon l'une quelconque des revendications précédentes, **caractérisé en ce que** le secret global (9) est enregistré au préalable sur l'appareil médical (1) et l'appareil de communication (4) et **en ce que** le secret local (12) est enregistré au préalable sur l'appareil de communication (4).

4. Ensemble selon l'une quelconque des revendications précédentes, **caractérisé en ce que** l'ensemble présente plusieurs systèmes d'ordre (3) avec un appareil de communication (4) respectif et/ou plusieurs appareils médicaux (1), dans lequel précisément l'un secret global (9) est enregistré au préalable sur les appareils de communication (4) et les appareils médicaux (1), et **en ce qu'**un secret local (12) respectif est enregistré au préalable sur chaque appareil de communication (4).

5. Ensemble selon l'une quelconque des revendications précédentes, **caractérisé en ce que** la clé de sécurité est également calculée et enregistrée au préalable sur l'appareil de communication (4) sur la base du secret global (9) et du secret local (12).

6. Ensemble selon la revendication 5, **caractérisé en ce que** la clé de sécurité est calculée ou se calcule sur l'appareil de communication (4) et sur l'appareil médical (1) au moyen d'un générateur de clé respectif.

7. Ensemble selon la revendication 6, **caractérisé en ce que** les deux générateurs de clé sont programmés avec une approche HMAC-SHA256.

8. Ensemble selon l'une quelconque des revendications précédentes, **caractérisé en ce que** l'appareil de communication (4) et l'appareil médical (1) sont configurés et programmés afin que les données de calcul de la clé de sécurité présentent de plus un identifiant de l'appareil de communication (4) provenant de l'appareil de communication.

9. Ensemble selon l'une quelconque des revendications précédentes, **caractérisé en ce que** la liaison radio sécurisée est une liaison WIFI ou WLAN.

10. Ensemble selon les revendications 8 et 9, **caractérisé en ce que** l'identifiant de l'appareil de communication (4) est un Service Set Identifier, SSID.

11. Ensemble selon l'une quelconque des revendications précédentes, **caractérisé en ce que** l'appareil de communication (4) et l'appareil médical (1) sont configurés et programmés afin que les données de calcul de la clé de sécurité soient transmises de manière chiffrée à l'appareil médical (1) par l'appareil de communication par le biais du canal de communication.

12. Ensemble selon l'une quelconque des revendications précédentes, **caractérisé en ce que** l'appareil de communication (4) et l'appareil médical (1) sont configurés et programmés afin que les données de calcul de la clé de sécurité soient déchiffrées sur l'appareil médical (1).

13. Ensemble selon l'une quelconque des revendications 1 à 8, **caractérisé en ce que** la liaison radio sécurisée est une liaison Bluetooth ou une liaison mobile.

14. Ensemble selon l'une quelconque des revendications précédentes, **caractérisé en ce que** l'appareil médical (1) est programmé et conçu afin de détecter une séparation physique des deux dispositifs (8) et ensuite d'interrompre la liaison radio sécurisée.

15. Procédé de communication et d'authentification d'appareils médicaux radio (1) au niveau d'un système d'ordre (3) relié à un réseau de communication, présentant ce qui suit :
- la génération d'une liaison directe point à point entre le système d'ordre (3) et l'au moins un appareil médical (1) ;
- l'établissement d'un canal de communication (7) entre le système d'ordre (3) et l'appareil médical (1) par le biais de la liaison directe point à point ;
- la transmission de données de calcul d'une clé de sécurité du système d'ordre (3) à l'appareil médical (1) par le biais du canal de communication (7), dans lequel les données transmises comprennent un secret local (12) ;
- la génération de la clé de sécurité sur l'appareil médical (1) en utilisant le secret local (12) et un secret (9) global enregistré sur l'appareil médical (1), dans lequel la clé de sécurité est en particulier une clé prépartagée ; et
- l'établissement d'une liaison radio sécurisée en utilisant la clé de sécurité générée pour transmettre des données médicales et/ou des données de commande entre le système d'ordre (3) et l'appareil médical (1).
